# FASCICULE DE BREVET EUROPEEN

(11) **EP 1 679 170 B1**
(45) Date de publication et mention de la délivrance du brevet: **03.06.2009**
(21) Numéro de dépôt: 06354001.7
(22) Date de dépôt: 05.01.2006
(51) Int. Cl.: B29C 41/18, B29C 33/30, B29C 41/50, B29C 41/34

(54) **Dispositif de rotomoulage équipé d'une tourelle porte-moules et d'une tourelle de poudrage pour la fabrication de pièces plastiques moulées**
Schleudergussvorrichtung zur Herstellung von Formstücken aus Kunststoff, mit einem Drehtisch für Formwerkzeuge und einem Drehtisch für Pulverbehälter
Rotational moulding apparatus for manufacturing plastic moulded parts, comprising a mould-carrying turret and a powder box-carrying turret

(30) Priorité: 07.01.2005 FR 0500168
(43) Date de publication de la demande: 12.07.2006
(73) Titulaire: Société d'Applications Thermiques, 73420 Méry (FR)
(72) Inventeur: Jaconelli, Walter, 73100 Aix-Les-Bains (FR); Jaconelli, Georges, 73100 Aix-Les-Bains (FR)
(74) Mandataire: Hecké, Gérard

(56) Documents cités:
- EP-A- 0 208 432
- EP-A- 1 013 388
- EP-A- 1 308 256
- US-A1- 2001 020 757
- PATENT ABSTRACTS OF JAPAN vol. 015, no. 473 (M-1185), 29 novembre 1991 (1991-11-29) & JP 03 202329 A (NIPPON RIKA KOGYOSHO:KK; others: 02), 4 septembre 1991 (1991-09-04)
- PATENT ABSTRACTS OF JAPAN vol. 006, no. 010 (M-107), 21 janvier 1982 (1982-01-21) & JP 56 130312 A (HITACHI ZOSEN CORP), 13 octobre 1981 (1981-10-13)

## Description

### Domaine technique de l'invention

L'invention est relative à un dispositif de rotomoulage comprenant :
- une première tourelle porte-moules et une deuxième tourelle support de bacs à poudre, lesdites tourelles étant mobiles en rotation autour de deux axes verticaux,
- des moyens de manoeuvre pour déplacer dans un poste de poudrage un bac à poudre vers un moule, et à les accoupler pour constituer un ensemble monobloc,
- et des moyens de mise en rotation dudit ensemble moule/bac à poudre autour d'un axe longitudinal, de manière à répartir la poudre thermoplastique dans le moule préalablement chauffé, pour former après fusion une coquille en matière plastique à paroi mince.

### Etat de la technique

Le document EP-A-208432 décrit une installation de rotomoulage comprenant un carrousel principal portant des moules, et au niveau du poste de poudrage est prévu un deuxième carrousel portant une pluralité de bacs de poudre, chacun contenant une matière thermoplastique de couleur différente. Les trajectoires des deux carrousels ne sont pas sécants, et lorsqu'un moule chauffé se présente au poste de poudrage, on déplace le bac de la couleur désirée sous le moule grâce à un chariot à déplacement radial. Un système hydraulique permet ensuite d'élever le bac à poudre en direction de la partie inférieure du moule avec laquelle il s'accouple par des moyens de fermeture. L'ensemble bac/moule peut alors tourner en rotation pour provoquer la dépose de la matière thermoplastique sur la paroi chauffée du moule.

Pour supprimer le chariot horizontal de transport du bac à poudre, il est connu d'utiliser dans une installation de rotomoulage un double carrousel, dans lequel les trajectoires des moules et des bacs à poudre se superposent. Le bac à poudre est situé sous le moule dans le poste de poudrage par le mouvement de rotation du carrousel inférieur. Après accouplement, l'ensemble moule et bac est maintenu aux deux extrémités de son axe de rotation par un cadre de support en forme de C.

Dans le document EP-A-1013388, l'axe de rotation de l'ensemble moule et bac à poudre est stabilisé par une contre-pointe de centrage agencée dans le plan médian à l'axe, et venant en appui axial dans une empreinte solidaire de la coquille. La contre-pointe est déplacée dans la direction de l'axe longitudinal dans l'alignement avec l'empreinte. La coquille est stabilisée pendant sa rotation grâce à l'introduction de la contre-pointe dans l'empreinte. La flèche engendrée au niveau de l'empreinte suite au montage en porte-à-faux de l'ensemble moule et bac doit néanmoins être réduite pour autoriser l'introduction de la contre-pointe de centrage. Lorsque la flèche dépasse une valeur prédéterminée, la mise en place de la contre-pointe est impossible, et l'axe de rotation n'est pas stabilisé entraînant des effets de balourds pendant la rotation. Une telle installation n'est pas adaptée pour la fabrication de pièces moulées nécessitant des moules de poids importants.

Un autre système de stabilisation de l'axe de l'ensemble moule et bac à poudre est décrit dans le document EP-A-1 310 342.

### Objet de l'invention

L'objet de l'invention consiste à réaliser un dispositif de rotomoulage, permettant à la fois une stabilisation optimum de l'axe horizontal de rotation indépendamment du porte-à-faux de l'ensemble bac à poudre accouplé au moule, et une répartition précise de la poudre dans le moule pendant la rotation.

Le dispositif selon l'invention comporte un palier escamotable monté à pivotement limité autour d'un axe entre une position inactive, et une position active dans laquelle il coopère avec un embout du cadre pour le redresser en alignement avec l'axe longitudinal, et des moyens de percussion aptes à transmettre une multitude de chocs mécaniques sur le cadre du moule pendant la rotation avec le bac à poudre, et en position active du palier.

Selon un mode de réalisation préférentiel, l'embout porteur est formé par un tourillon cylindrique, et est agencé à l'opposé de l'arbre d'entraînement en rotation du cadre de réception du moule, ledit arbre étant accouplé à un motoréducteur fixé au niveau de chaque bras de la première tourelle porte-moules. Le palier comporte un épaulement dont la venue en engagement avec l'embout constitue un moyen d'indexage de la première tourelle lors de son positionnement angulaire au-dessus du bac à poudre à accoupler. Les moyens de percussion comportent un support percuteur muni d'au moins une série d'actionneurs provoquant lors de la rotation dudit ensemble un impactage homogène multi-points sur le cadre de réception du moule le long de l'axe longitudinal.

Le mouvement de bas en haut du palier pivotant lors du passage vers la position active permet de relever l'extrémité de l'embout en supprimant la flèche s'exerçant sur l'ensemble cadre accouplé au bac à poudre. Cette flèche peut ainsi être importante en fonction du poids et de la longueur du porte-à faux. L'impactage multi-points sur le cadre du moule le long de l'axe longitudinal reste homogène et précis, et évite tout risque d'accumulation de poudre sur la coquille pendant la rotation de l'ensemble.

De préférence, le support percuteur est monté à basculement autour d'un axe, et comporte avantageusement deux séries d'actionneurs assurant ledit impactage dans la position abaissée. Le support percuteur est équipé de moyens de transmission destinés à dériver du mouvement de rotation du cadre, un mouvement complémentaire de rotation du support percuteur, lequel tourne avec le cadre dans le même sens et à la même vitesse.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels:
- la figure 1 est une vue schématique en plan de l'installation de rotomoulage selon l'invention ;
- la figure 2 montre une vue en élévation de l'installation de la figure 1,
- la figure 3 représente une vue partielle à échelle agrandie de la figure 2, montrant le centrage du cadre porte moule par le verrou escamotable ;
- les figures 4 et 5 illustrent le verrou respectivement en position inactive avaant le centrage, puis en position active après le centrage ;
- la figure 6 montre une vue en élévation du mécanisme percuteur pour l'impactage multi-points sur le cadre de réception du moule pendant la rotation.

### Description d'un mode de réalisation préférentiel.

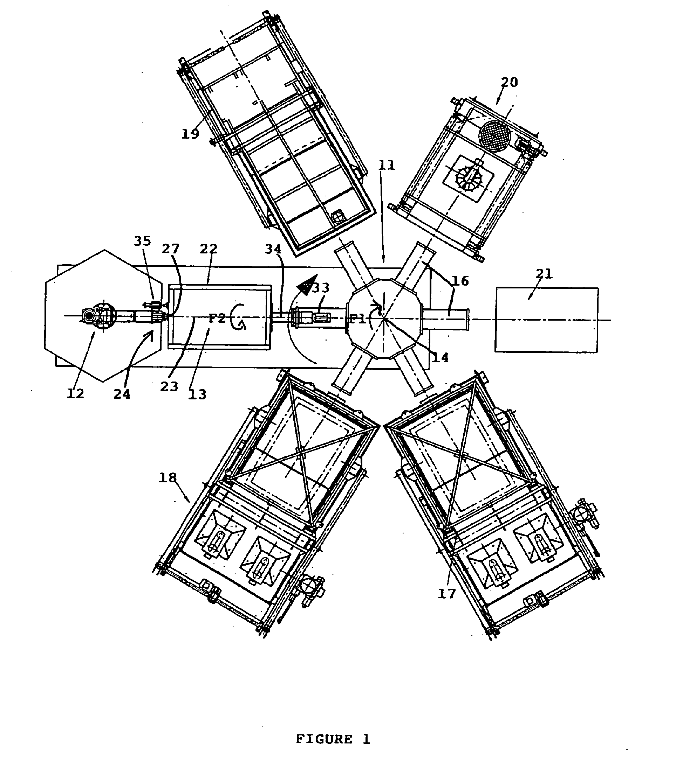

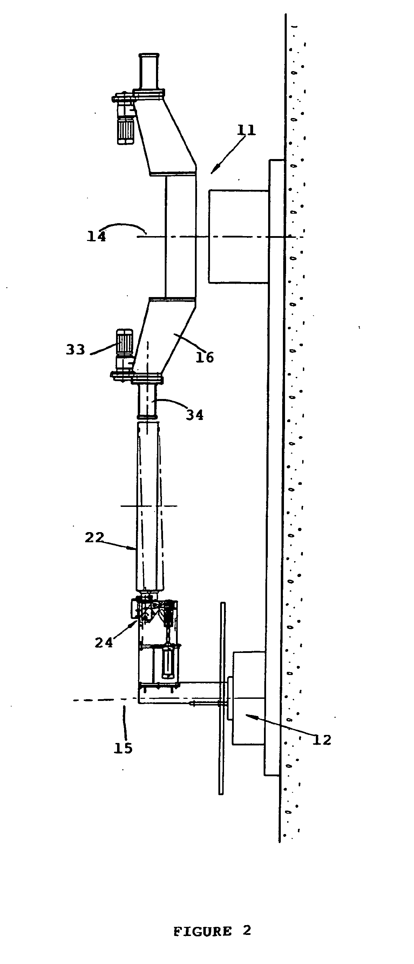

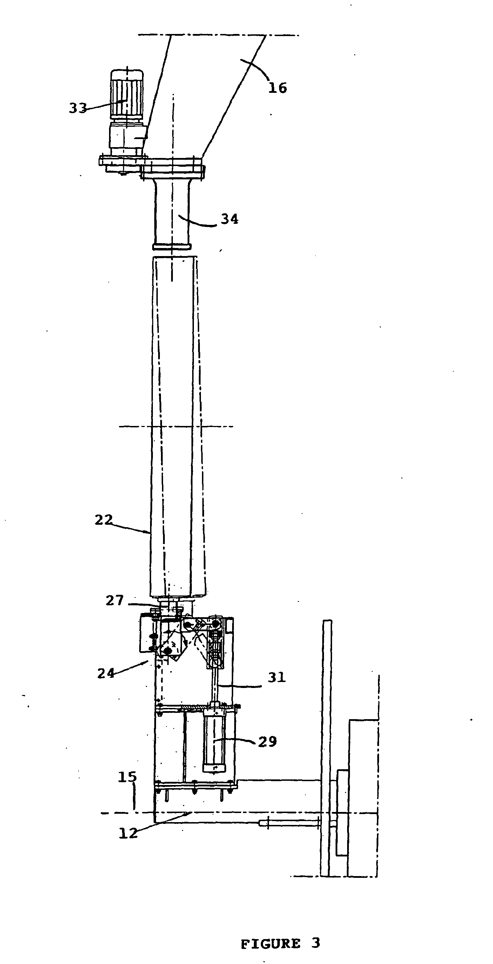

En référence aux figures 1 à 5, un dispositif de rotomoulage 10 est composé d'une première tourelle 11 porte-moules, d'une deuxième tourelle 12 support de bacs à poudre, d'un poste de poudrage 13, de moyens d'entraînement en rotation des deux tourelles 11, 12 autour de deux axes verticaux 14, 15, et de moyens de manoeuvre pour déplacer au poste de poudrage 13 un bac à poudre vers un moule préalablement chauffé, et à l'accoupler mécaniquement à ce dernier pour constituer un ensemble monobloc. Le dépôt de la matière thermoplastique pulvérulente contenue dans le bac à poudre sur la paroi interne chauffée du moule s'effectue ensuite par un mouvement de rotation de l'ensemble monobloc bac à poudre et moule autour d'un axe horizontal. La répartition uniforme de la poudre forme une couche mince sur la surface de la paroi chaude du moule, suivie d'une fusion de la poudre thermoplastique pour constituer après gélification et refroidissement une peau plastique thermoformée de faible épaisseur.

La première tourelle 11 porte-moules est dotée d'une pluralité de bras 16 répartis radialement en étoile à intervalles angulaires réguliers autour de l'axe 14 vertical. Ces bras 16 peuvent être amenés en regard de divers postes de travail lors de la rotation de la tourelle 11 dans le sens de la flèche F1. Les postes comprennent en plus du poste de poudrage 13, un four de préchauffage 17, un four de stabilisation 18, un four de gélification 19, une zone de refroidissement 20, et un poste de démoulage 21.

A chaque bras 16 est fixé un cadre 22 de réception d'un moule, l'ensemble pouvant tourner dans le sens F2 autour d'un axe longitudinal 23. Les moules sont montés amovibles sur les cadres 22 correspondants, et se déplacent dans un plan horizontal situé au-dessus de la trajectoire des bacs à poudre de la deuxième tourelle 12.

Au poste de poudrage 13, les trajectoires des deux tourelles 11, 12 rotatives présentent une zone sécante dans deux plans superposés, permettant aux moyens de manoeuvre de transférer verticalement un bac à poudre vers le cadre 22 d'un moule. Les moyens de manoeuvre peuvent être une table élévatrice, ou tout autre élément de levage, et comportent en plus un dispositif d'accouplement destiné à solidariser le bac à poudre au cadre 22 supportant le moule. Après accouplement, l'ensemble cadre 22 et bac à poudre subit un mouvement de rotation alterné ou continu (flèche F2) pour répartir la matière plastique dans le moule jusqu'à l'obtention d'une couche mince.

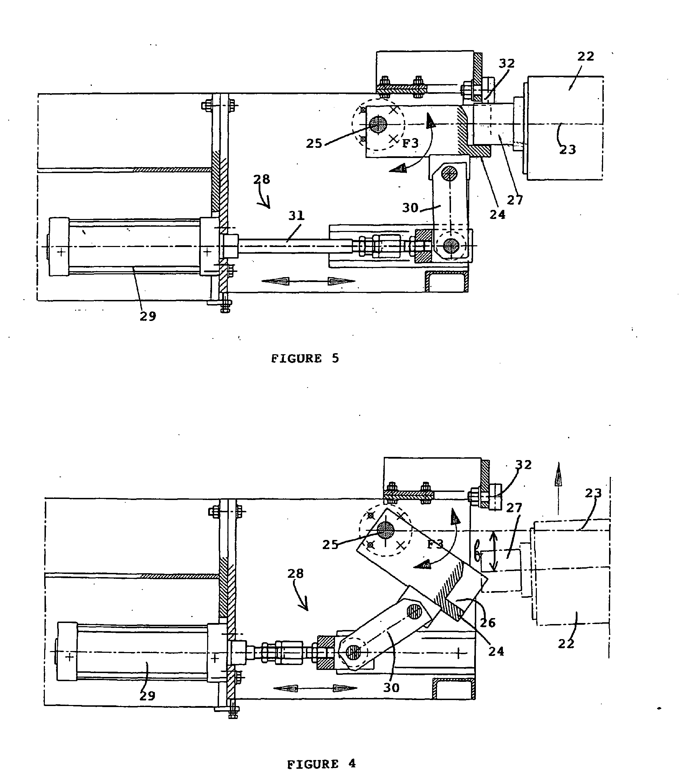

Selon l'invention, la deuxième tourelle 12 de support des bacs à poudre est équipée d'un palier 24 escamotable monté à pivotement limité autour d'un axe 25 entre une position inactive (figure 4) et une position active (figure 5). Le palier 24 comporte un épaulement 26 destiné à coopérer avec un embout 27 en forme de tourillon cylindrique porté par le cadre 22 support du moule.

Le palier 24 est actionné par un mécanisme de commande 28 comprenant à titre d'exemple un premier vérin 29 dont la tige 31 d'actionnement est articulée à un levier de transmission 30 destiné à faire pivoter le palier 24 dans le sens de la flèche F3 pour soutenir ou libérer l'embout 27 porteur, respectivement dans la position active et dans la position inactive.

Lors du passage vers la position active, le mouvement de bas en haut du palier 24 pivotant permet de relever l'extrémité de l'embout 27 en supprimant la flèche f s'exerçant sur l'ensemble cadre 22 accouplé au bac à poudre. Cette flèche f peut être importante en fonction du poids et de la longueur du porte-à faux. Elle est automatiquement compensée en position active du palier 24 lorsque l'épaulement 26 sollicite l'embout 27 contre une butée 32.

Cette position d'alignement reste stable, et l'axe de l'embout 27 coïncide dans le poste de poudrage 13 avec l'axe longitudinal 23 en permettant une rotation sans balourd de l'ensemble cadre 22 accouplé au bac à poudre. La mise en rotation de l'ensemble est assurée par un motoréducteur 33 fixé au niveau de chaque bras 16, et accouplé à un arbre 34 d'entraînement fixé au cadre 22 à l'opposé de l'embout 27.

La venue en engagement du palier 24 avec l'embout 27 porteur permet d'autre part un indexage précis de la première tourelle 11 porte-moules lors de son positionnement angulaire au-dessus du bac à poudre de la deuxième tourelle 12.

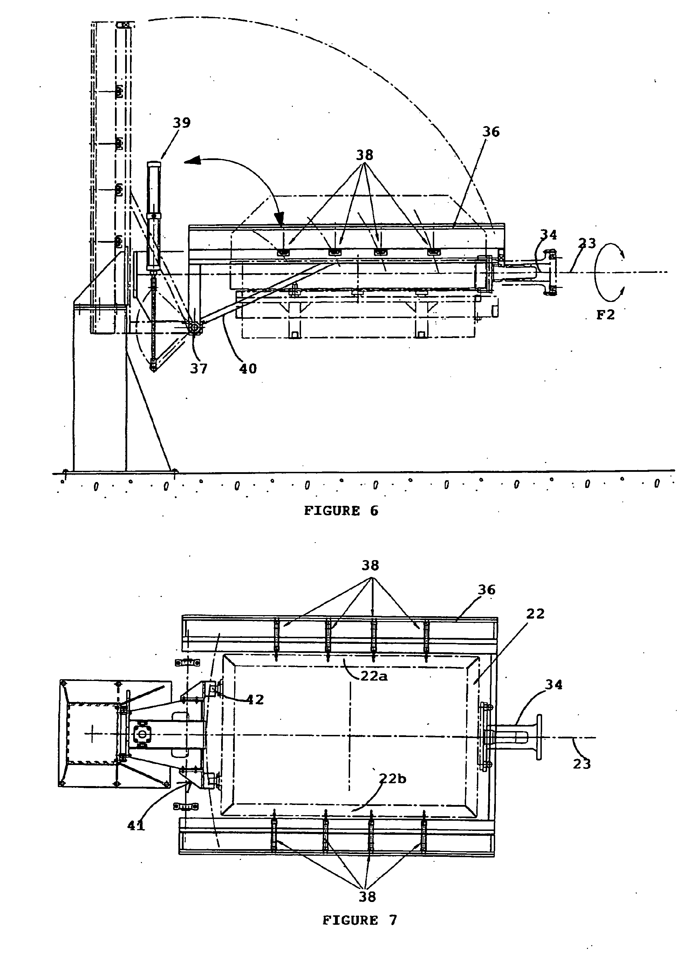

En référence aux figures 6 et 7, l'installation comporte de plus des moyens de percussion 35 aptes à transmettre une multitude de chocs mécaniques sur le cadre 22 support de moule pendant son mouvement de rotation, de manière à éviter tout risque d'accumulation de poudre dans le moule. De préférence, les moyens de percussion 35 comportent un support percuteur 36 monté à basculement autour d'un axe 37, et muni de deux séries d'actionneurs 38 provoquant dans la direction longitudinale un impactage homogène multi-points sur les faces latérales opposées 22a, 22b du cadre 22.

L'impactage multi-points s'effectue lors de la rotation de l'ensemble cadre 22 accouplé au bac à poudre, et après stabilisation de l'embout 27 par le palier 24, lequel est relevé en position active. Il suffit d'abaisser le support percuteur 36 au moyen d'un jeu de biellettes 40 actionné par un deuxième vérin 39, de manière à encadrer le cadre 22 avec un faible jeu.

A l'opposé de l'arbre 34 d'entraînement, le support percuteur 36 comporte en plus des moyens de transmission 41 destinés à dériver du mouvement de rotation du cadre 22 un mouvement complémentaire de rotation du support percuteur 36. Les moyens de transmission 41 sont en liaison avec un accouplement 42 fixé au cadre 22 à l'opposé de l'arbre 34. Lors de l'impactage, le support percuteur 36 est basculé vers la position de travail, et tourne avec le cadre 22 dans le même sens et à la même vitesse.

## Revendications

1. Dispositif de rotomoulage comprenant :
- une première tourelle (11) porte-moules et une deuxième tourelle (12) support de bacs à poudre, lesdites tourelles étant mobiles en rotation autour de deux axes (14, 15) verticaux,
- des moyens de manoeuvre pour déplacer dans un poste de poudrage (13) un bac à poudre vers un cadre (22) de réception d'un moule, et à les accoupler pour constituer un ensemble monobloc,
- des moyens de mise en rotation dudit ensemble moule/bac à poudre autour d'un axe longitudinal (23) stabilisé, de manière à répartir la poudre thermoplastique dans le moule préalablement chauffé pour former après fusion une coquille en matière plastique à paroi mince,
**caractérisé en ce qu'**il comporte de plus :
- un palier (24) escamotable monté à pivotement limité autour d'un axe (25) entre une position inactive, et une position active dans laquelle il coopère avec un embout (27) du cadre (22) pour le redresser en alignement avec l'axe longitudinal (23),
- et des moyens de percussion (35) aptes à transmettre une multitude de chocs mécaniques sur le cadre (22) du moule pendant la rotation avec le bac à poudre, et en position active du palier (24).

2. Dispositif de rotomoulage selon la revendication 1, **caractérisé en ce que** l'embout (27) porteur est formé par un tourillon cylindrique, et est agencé à l'opposé de l'arbre (34) d'entraînement en rotation du cadre (22) de réception du moule.

3. Dispositif de rotomoulage selon la revendication 1, **caractérisé en ce que** l'arbre (34) rotatif est accouplé à un motoréducteur (33) fixé au niveau de chaque bras (16) de la première tourelle (11) porte-moules.

4. Dispositif de rotomoulage selon la revendication 1, **caractérisé en ce que** le palier (24) pivotant est actionné par un mécanisme de commande (28) piloté par un premier vérin (29) articulé à un levier de transmission (30).

5. Dispositif de rotomoulage selon la revendication 1, **caractérisé en ce que** le palier (24) comporte un épaulement (26) dont la venue en engagement avec l'embout (27) constitue un moyen d'indexage de la première tourelle (11) lors de son positionnement angulaire au-dessus du bac à poudre à accoupler.

6. Dispositif de rotomoulage selon la revendication 1, **caractérisé en ce que** les moyens de percussion (35) comportent un support percuteur (36) muni d'au moins une série d'actionneurs (38) provoquant lors de la rotation dudit ensemble, un impactage homogène multi-points sur le cadre (22) de réception du moule le long de l'axe longitudinal (23).

7. Dispositif de rotomoulage selon la revendication 6, **caractérisé en ce que** le support percuteur (36) est monté à basculement autour d'un axe (37), et comporte deux séries d'actionneurs (38) assurant ledit impactage dans la position abaissée.

8. Dispositif de rotomoulage selon la revendication 7, **caractérisé en ce que** le support percuteur (36) est accouplé à un jeu de biellettes (40) en liaison avec un deuxième vérin (39) de manière à encadrer le cadre (22) avec interposition d'un jeu dans ladite position abaissée.

9. Dispositif de rotomoulage selon la revendication 6, **caractérisé en ce que** le support percuteur (36) est équipé de moyens de transmission (41) destinés à dériver du mouvement de rotation du cadre (22), un mouvement complémentaire de rotation du support percuteur (36).

10. Dispositif de rotomoulage selon la revendication 9, **caractérisé en ce que** les moyens de transmission (41) sont en liaison mécanique avec un accouplement (42) fixé au cadre (22) à l'opposé de l'arbre (34) rotatif, le support percuteur (36) tournant avec le cadre (22) dans le même sens et à la même vitesse.

## Claims

1. A rotational moulding apparatus comprising:
- a first mould-carrying turret (11) and a second powder box-carrying turret (12), said turrets being movable in rotation around two vertical axes (14, 15),
- operating means to move a powder box in a powdering station (13) to a mould receipt frame (22) and to couple same together to form a monoblock assembly,
- means for rotating said mould/powder box assembly around a stabilized longitudinal axis (23) so as to distribute the thermoplastic powder in the previously heated mould to form a thin-walled shell made of plastic material after melting,
**characterized in that** it further comprises:
- a retractable bearing (24) mounted with limited pivoting around a swivel-pin (25) between an inactive position and an active position in which it operates in conjunction with an end-piece (27) of the frame (22) to rectify it in alignment with the longitudinal axis (23),
- and striker means (35) able to transmit a multitude of mechanical impacts on the mould frame (22) during rotation with the power box, and in the active position of the bearing (24).

2. The rotational moulding apparatus according to claim 1, **characterized in that** the carrier end-piece (27) is formed by a cylindrical gudgeon and is arranged opposite the shaft (34) for driving the mould receipt frame (22) in rotation.

3. The rotational moulding apparatus according to claim 1, **characterized in that** the rotary shaft (34) is coupled with a reducer motor (33) fixed at the level of each arm (16) of the first mould-carrying turret (11).

4. The rotational moulding apparatus according to claim 1, **characterized in that** the pivoting bearing (24) is actuated by an operating mechanism (28) operated by a first jack (29) articulated on a transmission lever (30).

5. The rotational moulding apparatus according to claim 1, **characterized in that** the bearing (24) comprises a rim (26), engagement of the latter with the end-piece (27) constituting an indexing means of the first turret (11) when angular positioning of the latter is performed above the powder box to be coupled.

6. The rotational moulding apparatus according to claim 1, **characterized in that** the striker means (35) comprise a striker support (36) equipped with at least one series of actuators (38) causing homogenous multi-point impacting on the mould receipt frame (22) along the longitudinal axis (23) when rotation of said assembly takes place.

7. The rotational moulding apparatus according to claim 6, **characterized in that** the striker support (36) is mounted rocking around an axis (37) and comprises two series of actuators (38) for performing said impacting in the lowered position.

8. The rotational moulding apparatus according to claim 7, **characterized in that** the striker support (36) is coupled to a set of rods (40) connecting with a second jack (39) so as to surround the frame (22) with clearance in said lowered position.

9. The rotational moulding apparatus according to claim 6, **characterized in that** the striker support (36) is equipped with transmission means (41) designed to derive a complementary rotational movement of the striker support (36) from the rotational movement of the frame (22).

10. The rotational moulding apparatus according to claim 9, **characterized in that** the transmission means (41) are mechanically connected with a coupling (42) fixed to the frame (22) opposite the rotary shaft (34), the striker support (36) rotating with the frame (22) in the same direction and at the same speed.

## Patentansprüche

1. Rotationsformanlage, die umfasst:
- einen ersten Formträger-Drehtisch (11) und einen zweiten Drehtisch (12) zur Aufnahme von Pulverbehältern, welche Drehtische um zwei vertikale Achsen (14, 15) drehbeweglich sind,
- Mittel zum Versetzen eines Pulverbehälters in einer Pulverzuführstation (13) in Richtung eines Form-Aufnahmerahmens (22) und zu deren Aneinanderkopplung zur Herstellung einer einstückigen Einheit,
- Mittel zum Drehantrieb der Einheit aus Form und Pulverbehälter um eine stabilisierte Längsachse (23), um das Thermoplastpulver in der vorgeheizten Form zu verteilen, um nach dem Schmelzen eine dünnwandige Coquille aus Kunststoff herzustellen,
**dadurch gekennzeichnet, dass** sie ferner umfasst:
- ein versenkbares Lager (24), das schwenkbar um eine Achse (25) zwischen einer inaktiven und einer aktiven Position montiert ist, in welcher aktiven Position es mit einem Ansatzstück (27) des Rahmens (22) zusammenwirkt, um diesen auf die Längsachse (23) ausgerichtet wieder aufzurichten,
- und Schlagmittel (35), die geeignet sind, um während der Drehung eine Vielzahl von mechanischen Schlägen auf den Rahmen (22) der Form mit dem Pulverbehälter und in aktiver Position des Lagers (24) zu übertragen.

2. Rotationsformanlage nach Anspruch 1, **dadurch gekennzeichnet, dass** das tragende Ansatzstück (27) von einem zylindrischen Bolzen gebildet und entgegengesetzt zur Drehantriebswelle (34) des Aufnahmerahmens (22) für die Form angeordnet ist.

3. Rotationsformanlage nach Anspruch 1, **dadurch gekennzeichnet, dass** die Drehwelle (34) an einen Getriebemotor (33) gekoppelt ist, der in Höhe jedes Arms (16) des ersten Formträger-Drehtischs (11) angebracht ist.

4. Rotationsformanlage nach Anspruch 1, **dadurch gekennzeichnet, dass** das Schwenklager (24) mittels eines Steuerungsmechanismus (28) betätigt wird, der über einen ersten Zylinder (29) gesteuert wird, der an einen Übertragungshebel (30) angelenkt ist.

5. Rotationsformanlage nach Anspruch 1, **dadurch gekennzeichnet, dass** das Lager (24) einen Vorsprung (26) aufweist, dessen Eingriff mit dem Ansatzstück (27) ein Indexierungsmittel des ersten Drehtischs (11) bei dessen Winkelpositionierung über dem anzukoppelnden Pulverbehälter darstellt.

6. Rotationsformanlage nach Anspruch 1, **dadurch gekennzeichnet, dass** die Schlagmittel (35) einen Schlagmittelhalter (36) umfassen, der mit mindestens einer Reihe von Schaltern (38) versehen ist, die bei der Drehung der genannten Einheit an vielen Punkten gleichmäßige Schläge auf den Aufnahmerahmen (22) der Form entlang der Längsachse (23) bewirken.

7. Rotationsformanlage nach Anspruch 6, **dadurch gekennzeichnet, dass** der Schlagmittelhalter (36) schwenkbar um eine Achse (37) montiert ist und zwei Reihen Schalter (38) umfasst, die das Schlagen in der abgesenkten Position sicherstellen.

8. Rotationsformanlage nach Anspruch 7, **dadurch gekennzeichnet, dass** der Schlagmittelhalter (36) an einen Satz Anlenkstangen (40) gekoppelt ist, die mit einem zweiten Zylinder (39) verbunden sind, in der Weise, dass sie den Rahmen (22) mit Spiel in der genannten abgesenkten Position einfassen.

9. Rotationsformanlage nach Anspruch 6, **dadurch gekennzeichnet, dass** der Schlagmittelhalter (36) mit Mitteln zur Übertragung (41) versehen ist, die dazu bestimmt sind, von der Drehbewegung des Rahmens (22) eine zusätzliche Drehbewegung des Schlagmittelhalters (36) abzuleiten.

10. Rotationsformanlage nach Anspruch 9, **dadurch gekennzeichnet, dass** die Übertragungsmittel (41) in mechanischer Verbindung stehen mit einer Kupplung (42), die entgegengesetzt zur Drehwelle (34) am Rahmen (22) befestigt ist, wobei sich der Schlagmittelhalter (36) mit dem Rahmen (22) in gleicher Richtung und mit gleicher Geschwindigkeit dreht.
